# EUROPEAN PATENT SPECIFICATION

(11) **EP 3 018 668 B1**
(45) Date of publication and mention of the grant of the patent: **21.08.2019**
(21) Application number: 15188729.6
(22) Date of filing: 07.10.2015
(51) Int. Cl.: H01F 38/14

(54) **AZIMUTH THRUSTER COMPRISING APPARATUS FOR TRANSFERRING ELECTRICAL ENERGY**
PROPELLERGONDEL MIT VORRICHTUNG ZUR ÜBERTRAGUNG VON ELEKTRISCHER ENERGIE
PROPULSEUR AZIMUTAL AVEC APPAREIL PERMETTANT LE TRANSFERT D'ÉNERGIE ÉLECTRIQUE

(30) Priority: 03.11.2014 GB 201419519; 29.07.2015 GB 201513342
(43) Date of publication of application: 11.05.2016
(73) Proprietor: Rolls-Royce plc, London SW1E 6AT (GB)
(72) Inventor: Edwards, Huw, Derby, Derbyshire DE24 8BJ (GB)
(74) Representative: Rolls-Royce plc

(56) References cited:
- WO-A1-00/15495
- WO-A1-95/04363
- WO-A1-2008/060150
- WO-A1-2012/035948
- WO-A1-2012/055443
- DE-A1-102010 040 366
- DE-U1- 20 204 584
- GB-A- 2 483 374
- US-A1- 2012 091 949
- US-A1- 2013 147 201

## Description

The present disclosure concerns apparatus for transferring electrical energy.

Mechanical systems may comprise at least one part that is rotatable relative to an adjacent (stationary or rotatable) part of the mechanical system. The transfer of electrical energy between two such parts may present several challenges due to the movement of the two parts. For example, a vessel may comprise an azimuth thruster for propelling the vessel in water. The azimuth thruster usually includes a propeller that may be rotated about a vertical axis to select the direction of thrust. Transferring electrical energy between a stationary part of the vessel and the rotatable azimuth thruster may present several challenges.

GB2483374 relates to an apparatus for transferring power from a first system unit to a second system unit which rotates relative to the first system unit. The first system unit includes a primary coil of a rotary transformer and the second system unit includes a secondary coil. The coils are arranged to provide an off-axis connector for transferring power by magnetic induction. In one embodiment, each coil is encased in an insulating material and the coils are separated only by a thin bearing layer. Each of the system units also includes a communication element such as a loop RF antenna to provide data transfer between the rotating units. Alternatively data communication could be provided through the rotary transformer used for power transfer, or a different rotary transformer. The apparatus finds particular application in powering and controlling a cutting tool for cutting pipes underwater.

According to a first aspect there is provided an azimuth thruster as claimed in claim 1.

The first inductor and the second inductor form a transformer when the first part and the second part are at least partially aligned.

The apparatus may further comprise a plurality of inductors positioned on separate parts of the perimeter of the first or second surface.

Where the plurality of inductors may be positioned on the separate parts of the perimeter of the second surface, at least one of the plurality of inductors positioned on the separate parts of the perimeter of the second surface may be to generate an electrical current from the magnetic field generated by the first inductor (20) when the first part, and one of the separate parts of the second surface, are at least partially aligned.

The apparatus may further comprise an electrical energy storage device to store electrical energy from the second inductor.

The electrical energy storage device may comprise at least one battery or at least one supercapacitor.

The electrical energy storage device may comprise at least one battery and at least one supercapacitor, wherein the at least one supercapacitor may be to receive electrical energy from the second inductor at a first rate, and may be to provide the electrical energy to the at least one battery at a second rate, less than the first rate.

The apparatus may comprise a further electrical energy storage device to provide electrical energy to the first inductor.

The apparatus may further comprise a controller to control the further electrical energy storage device to provide electrical energy to the first inductor when the controller determines that a predetermined criterion has been met.

The controller may be to determine whether an energy supply to the first inductor has been reduced or removed, and may be to control the further electrical energy storage device to provide electrical energy to the first inductor when the controller determines that the electrical energy supply has been reduced or removed.

The apparatus may further comprise radio frequency communication circuitry coupled to the second inductor to receive electrical energy from the second inductor.

The apparatus may further comprise a sensor to sense an operating condition of at least a part of the apparatus, the radio frequency communication circuitry may be coupled to the sensor and may be configured to transmit a wireless signal for the sensed operating condition.

The operating condition may be vibration of at least a part of the apparatus.

The sensor may include a device to sense electrical output from the second inductor to determine whether the electrical output exceeds a threshold value for a predetermined position of the second member, relative to the first member, and for a predetermined electrical input to the first inductor, to enable determination of quality of oil within the apparatus.

The apparatus may further comprise a controller to control the second member to rotate to at least partially align the first part and the second part.

The controller may be configured to control the second member to rotate to at least partially align the first part and the second part at a predetermined time of day.

The first inductor may comprise a first resonant transformer. The second inductor may comprise a second resonant transformer.

According to a second aspect there is provided a vessel comprising an azimuth thruster as described in any of the preceding paragraphs.

The skilled person will appreciate that except where mutually exclusive, a feature described in relation to any one of the above aspects of the invention may be applied mutatis mutandis to any other aspect of the invention.

Embodiments of the invention will now be described by way of example only, with reference to the Figures, in which:
**Figure 1** illustrates a schematic diagram of a side view of apparatus for transferring electrical energy according to various examples;
**Figure 2** illustrates a schematic diagram of a first member of the apparatus illustrated in Fig. 1 as viewed along arrow A;
**Figure 3** illustrates a schematic diagram of a second member of the apparatus illustrated in Fig. 1 as viewed along arrow B;
**Figure 4** illustrates a schematic diagram of a plan view of another second member of the apparatus illustrated in Fig. 1;
**Figure 5** illustrates a schematic diagram of apparatus for transferring electrical energy according to various examples;
**Figure 6** illustrates a cross sectional side view of another apparatus according to various examples;
**Figure 7** illustrates a schematic diagram of apparatus for transferring electrical energy according to various examples;
**Figure 8** illustrates a schematic diagram of apparatus for transferring electrical energy according to various examples; and
**Figure 9** illustrates a schematic diagram of a vessel comprising apparatus for transferring electrical energy according to various examples.

In the following description, the terms 'connect' and 'couple' mean operationally connected and coupled. It should be appreciated that there may be any number of intervening components between the mentioned features, including no intervening components.

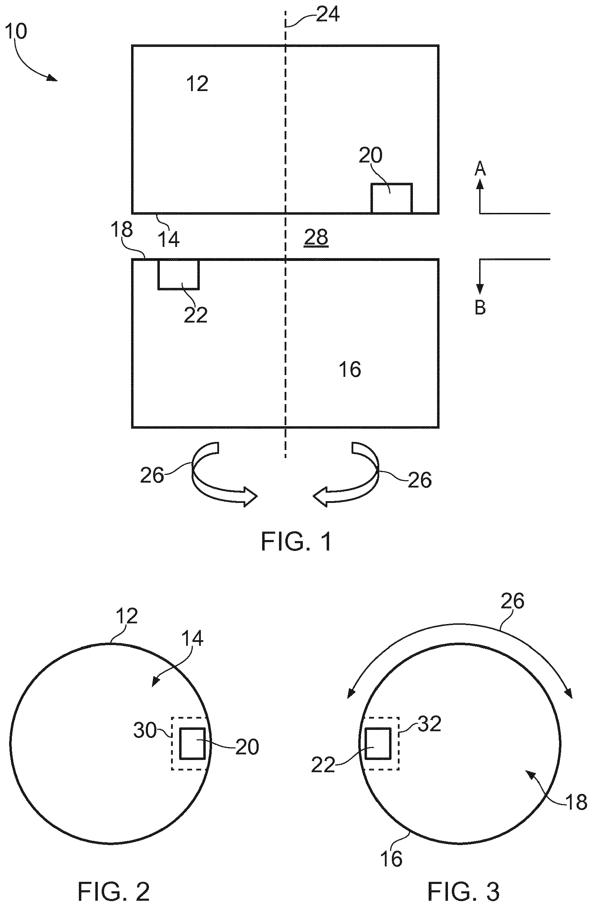

Figure 1 illustrates apparatus 10 for transferring electrical energy according to various examples. The apparatus 10 includes a first member 12 having a first surface 14, a second member 16 having a second surface 18, a first inductor 20, and a second inductor 22. The apparatus 10 may be any mechanical system, or part of a mechanical system. For example, the apparatus 10 may include part of an azimuth thruster for a vessel.

The first member 12 may be any stationary, or rotatable, part (or parts) of the apparatus 10. For example, the first member 12 may include an upper housing of an azimuth thruster. The first surface 14 may have any shape, and may have a circular shape when viewed in plan, as illustrated in Fig. 2.

The second member 16 may be any rotatable part (or parts) of the apparatus 10. For example, the second member 16 may include a lower housing of an azimuth thruster. The second member 16 is arranged to rotate about an axis 24 as indicated by arrows 26. Where the apparatus 10 includes a part of an azimuth thruster, the axis 24 may be a longitudinal axis of the azimuth thruster. The second surface 18 may have any shape, and may have a circular shape when viewed in plan, as illustrated in Fig. 3.

The first member 12 and the second member 16 are positioned so that the first surface 14 and the second surface 18 are adjacent to one another and define a gap 28 there between. The second surface 18 of the second member 16 is rotatable relative to the first surface 14 of the first member 12 and may rotate three hundred and sixty degrees relative to the first surface 14.

The first inductor 20 is positioned on a first part 30 of the first surface 14 and is arranged to provide a magnetic field. The first part 30 is a portion of the first surface 14 and consequently has a smaller surface area than the first surface 14. Additionally, the first part 30 extends along a portion of the perimeter of the first surface 14 (the first part 30 extends along an arc of the circumference of first surface 14 illustrated in Fig. 2). The first inductor 20 may have any suitable shape and structure and may include a conductor (such as an enamel insulated copper conductor) coiled around a core (such as laminated sheets of annealed silicon steel, with grain orientation in the direction of magnetic flux flow). In some examples, the first inductor 20 may comprise a resonant transformer, operating at higher frequencies (MHz for example), and including inductor and capacitor (LC) circuitry. The first inductor 20 may be coupled to an alternating current source.

The second inductor 22 is positioned on a second part 32 of the second surface 18 and is arranged to generate an electrical current from the magnetic field (generated by the first inductor 20) when the first part 30 and the second part 32 are at least partially aligned. In other words, the first inductor 20 and the second inductor 22 form a transformer when the first part 30 and the second part 32 are at least partially aligned. The first part 30 and the second part 32 may be at least partially aligned and form a transformer when they at least partially overlap one another when viewed in plan (that is, the first inductor 20 and the second inductor 22 may form a transformer when at least one angular coordinate of the first part 30 is the same as an angular coordinate of the second part 32, where the axis 24 is also the longitudinal axis of a cylindrical coordinate system).

The second part 32 is a portion of the second surface 18 and consequently has a smaller surface area than the second surface 18. Additionally, the second part 32 extends along a portion of the perimeter of the second surface 18 (the second part 32 extends along an arc of the circumference of second surface 18 illustrated in Fig. 3).

Where the apparatus 10 is included within an azimuth thruster of a vessel, such as a ship, the positioning of the first and second parts 30, 32 may be selected to correspond to the orientation of the azimuth thruster that propels the vessel in a forwards direction.

The second inductor 22 may have any suitable shape and structure and may include a conductor (such as an enamel insulated copper conductor) coiled around a core (such as laminated sheets of annealed silicon steel, with grain orientation in the direction of magnetic flux flow). The second inductor 22 may be coupled to an electronic component (such as radio frequency circuitry, and/or an electrical energy storage device for example) to provide the generated electrical current to the electronic component. In some examples, the second inductor 22 is coupled to an electronic component via an alternating current to direct current (AC/DC) converter, and a filter (such as a diode rectifier and capacitor).

In some examples, the second inductor 22 may comprise a resonant transformer (which may also be referred to as a magnetic resonator), and where the first inductor 20 also comprises a resonant transformer, the first inductor 20 and the second inductor 22 may transfer electrical energy via resonant inductive coupling (which may also be referred to as electrodynamic induction) where the first and second inductors 20, 22 operate at least partially within the same operational resonant frequency bands. The resonant transformers may be advantageous in that they may be more efficient than other inductors and may not suffer from attractive forces between the primary and secondary parts of the power transfer device.

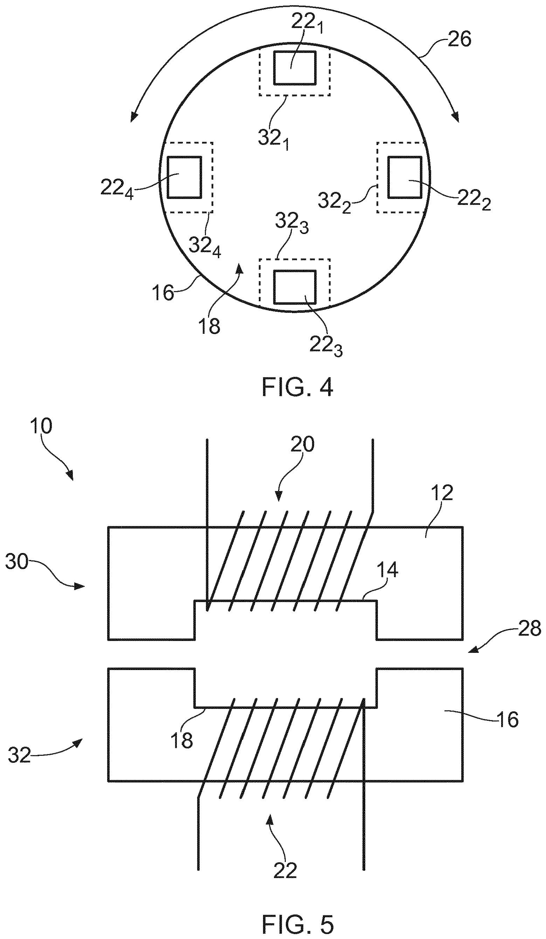

In some examples and as illustrated in Fig. 4, the apparatus 10 may comprise a plurality of inductors 22₁, 22₂, 22₃, 22₄, that are positioned on separate parts 32₁, 32₂, 32₃, 32₄ of the second surface 18 respectively. The parts 32₁, 32₂, 32₃, 32₄ may be spaced equidistantly around the perimeter of the second surface 18 and define gaps there between. Consequently, where the second surface 18 is circular (for example), the sum of the arcs of the parts 32₁, 32₂, 32₃, 32₄ is less than the circumference of the second surface 18.

In other examples, the plurality of inductors 22₁, 22₂, 22₃, 22₄ may be positioned on the first surface 14 since the first surface 14 may be easier to access should there be a maintenance requirement for the inductors 22₁, 22₂, 22₃, 22₄. Additionally, the inductors 22₁, 22₂, 22₃, 22₄ may be arranged in a non-equidistant arrangement. For example, three inductors may be positioned at quarter segment arcs and near the position required for forward or near forward thrust.

This arrangement may be advantageous in that it may enable electrical energy to be supplied between the first and second members 12, 16 for a plurality of different orientations of the second member 16 relative to the first member 12. Where the apparatus 10 is included within an azimuth thruster of a vessel such as a tug boat (where the azimuth thruster may be used frequently in a multitude of different directions), the arrangement may be advantageous in that it may enable the transfer of electrical energy for multiple different orientations of the azimuth thruster.

In operation, as the second surface 18 rotates relative to the first surface 14, at least one of the plurality of inductors 22₁, 22₂, 22₃, 22₄ generates an electrical current from the magnetic field (generated by the first inductor 20) when the first part 30, and one of the parts 32₁, 32₂, 32₃, 32₄ of the second surface 18, are at least partially aligned. The generated electrical current may be provided to an electronic component of the apparatus 10.

The apparatus 10 may provide several advantages. First, electrical energy may be transferred from the stationary (or rotatable) first member 12, to the rotatable second member 16 when the first and second parts 30, 32 are at least partially aligned. In other words, the apparatus 10 advantageously enables electrical energy to be transferred across an interface where there is relative movement of the members 12, 16. Second, the first and second inductors 20, 22 may be provided on any size of first and second members 12, 16 and the apparatus 10 may advantageously be used for mechanical systems of varying sizes. In particular, the size of the first and second inductors 20, 22 is independent of the size of the first and second members 12, 16, and may consequently be used for any size of first and second member 12, 16. This can enable a lower cost solution.

Figure 5 illustrates a schematic diagram of apparatus 10 and in particular, a close up of the structure of the first and second inductors 20, 22. The first part 30 of the first member 12 has an inverted U shape. The first inductor 20 comprises a conductive coil wrapped around the centre of the inverted U shape of the first part 30 and over the first surface 14. The second part 32 of the second member 16 has a U shape. The second inductor 22 comprises a conductive coil wrapped around the centre of the U shape of the second part 32 and over the second surface 18.

In one example, the first inductor 20 has one hundred turns and the second inductor 22 has ten turns, thus providing a step down transformer from voltages in the order of hundreds of volts to the order of tens of volts. The gap 28 between the first inductor 20 and the second inductor 22 may be of the order of millimetres, for example, five millimetres.

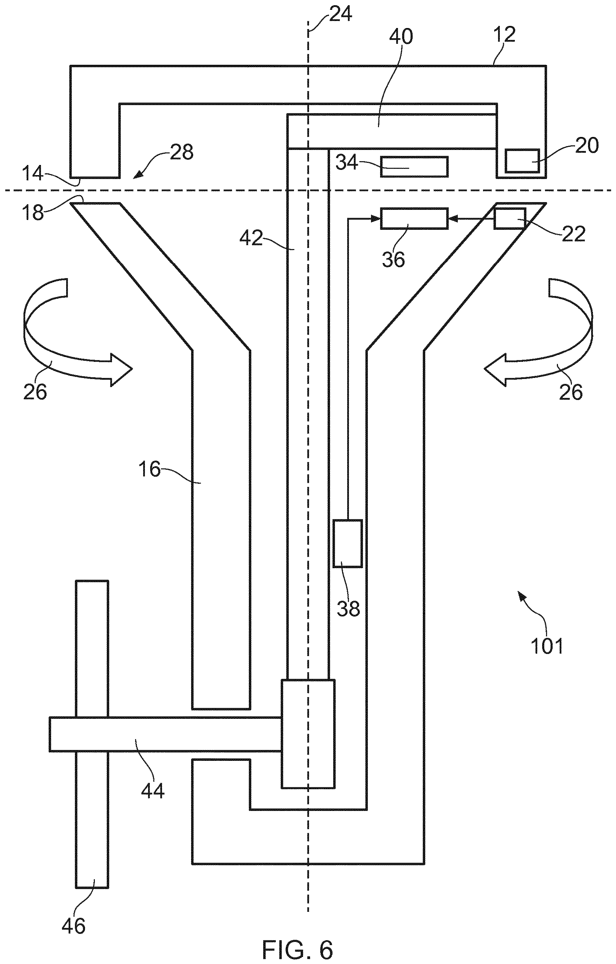

Figure 6 illustrates a cross sectional side view of another apparatus 101 according to various examples. The apparatus 101 is similar to the apparatus 10 illustrated in Figs. 1 to 5, and where the features are similar, the same reference numerals are used.

The apparatus 101 includes at least a part of an azimuth thruster that comprises an upper housing 12, a lower housing 16, a first inductor 20, at least one second inductor 22, first radio frequency circuitry 34, second radio frequency circuitry 36, a sensor 38, an input shaft 40, a vertical shaft 42, a propeller shaft 44, and a propeller 46. The azimuth thruster also comprises a longitudinal axis 24 about which the azimuth thruster may rotate to select the direction of thrust.

The upper housing 12 of the azimuth thruster may be coupled to a hull of a vessel and is stationary relative to the hull. The upper housing 12 houses the first radio frequency circuitry 34, the input shaft 40, and a part of the vertical shaft 42. The first surface 14 of the upper housing 12 defines an annulus and is oriented perpendicular to the longitudinal axis 24 of the azimuth thruster. The first inductor 20 is mounted on the first surface 14 of the upper housing 12 and may have the structure illustrated in Fig. 5.

The lower housing 16 houses the second radio frequency circuitry 36, the sensor 38, the vertical shaft 42, and at least a part of the propeller shaft 44. The lower housing 16 of the azimuth thruster is rotatable relative to the upper housing 12 about the longitudinal axis 24 as indicated by the arrows 26. The second surface 18 of the lower housing 16 defines an annulus, is oriented perpendicular to the longitudinal axis 24 of the azimuth thruster, and is positioned adjacent the first surface 14 of the upper housing 12. The second inductor 22 is mounted on the second surface 18 of the lower housing 16 and may have the structure illustrated in Fig. 5.

The first radio frequency circuitry 34 is arranged to receive electromagnetic signals in one or more operational frequency bands and to provide the signals to a controller (not illustrated in Fig. 6) via a wired or wireless connection. The first radio frequency circuitry 34 comprises at least one receiver and/or at least one transceiver, and one or more antennas. The first radio frequency circuitry 34 may be positioned at any suitable location within the upper housing 12 and may be positioned adjacent to the gap 28 between the upper and lower housings 12, 16.

The second radio frequency circuitry 36 is arranged to transmit electromagnetic signals in one or more operational frequency bands, and is connected to the sensor 38 to receive signals there from. The second radio frequency circuitry 36 comprises at least one transmitter and/or at least one transceiver, and at least one antenna. The second radio frequency circuitry 36 may be positioned at any suitable location within the lower housing 16 and may be positioned adjacent to the gap 28 between the upper and lower housings 12, 16 to reduce the number of components or structures between the first radio frequency circuitry 34 and the second radio frequency circuitry 36.

The sensor 38 may be any suitable device or devices for sensing at least one operating condition of the azimuth thruster. For example, the sensor 38 may comprise a device or devices for sensing vibration of at least a part of the azimuth thruster. In various examples, the sensor 38 is arranged to measure vibration at 4 locations (that is, at bearings and gearboxes). The vibration sensors may be high data rate (high sample frequency, high resolution) The sensor 38 may comprise thermal sensors, which may be low data rate (low frequency, low resolution). The sensor 38 may include sensors for sensing acoustic waves, and/or oil quality, and/or oil pressure. In some examples, the data for the at least one operating condition (for example, vibration and thermal data) may be measured continuously. In other examples, the data for the at least one operating condition may be sampled data and/or characteristic data and/or compressed data. Characteristic data can include a fast Fourier transform (FFT) of a frequency signal for example, or data indicating that certain temperatures have been exceeded. The sensor 38 is connected to the second radio frequency circuitry 36 to provide a signal for the sensed operating condition to the second radio frequency circuitry 36.

The input shaft 40, the vertical shaft 42, and the propeller shaft 44 may be coupled via suitable gears and form a drive train between an engine (not illustrated) and the propeller 46. In operation, the engine provides torque to the drive train to rotate the propeller 46.

In operation, the sensor 38 may sense at least one operating condition of the azimuth thruster and provide a signal for the sensed operating condition to the second radio frequency circuitry 36. When the first and second inductors 20, 22 are at least partially aligned, electrical energy is transferred across the gap 28, to charge energy storage (such as batteries), not illustrated in this figure for clarity, where the battery and/or second inductor supplies power to the second radio frequency circuitry 36. The supplied electrical energy powers the second radio frequency circuitry 36 and enables the second radio frequency circuitry 36 to transmit an electromagnetic signal for the sensed operating condition. The first radio frequency circuitry 34 receives the electromagnetic signal for the sensed operating condition and then provides a signal for the sensed operating condition to a controller for processing.

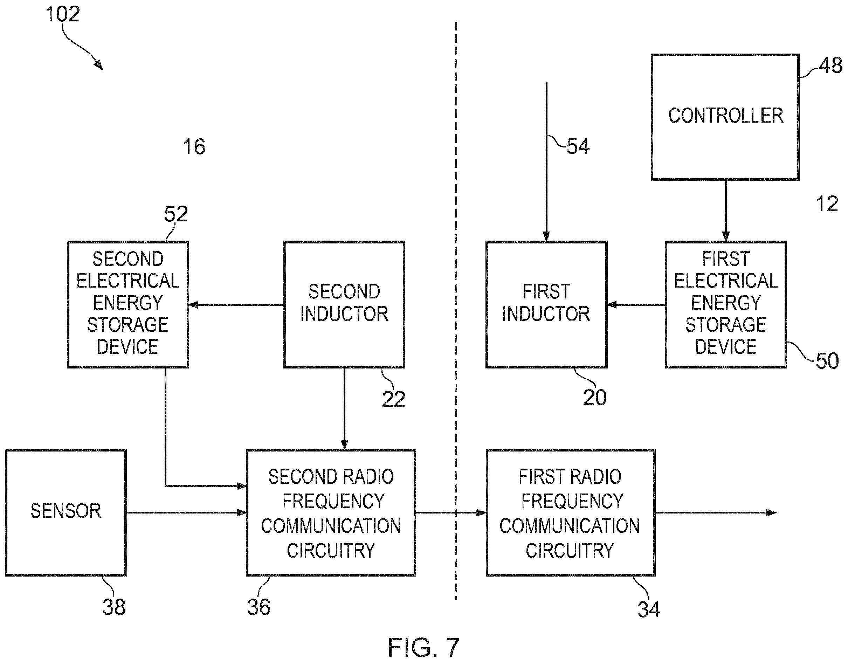

The apparatus 101 may be advantageous in that electrical energy may be transferred across the interface between the upper and lower housings 12, 16 of the azimuth thruster to supply electrical energy to the second radio frequency circuitry 36. Furthermore, the apparatus 101 is advantageous when compared to using a slip ring contact between the upper and lower housings 12, 16 in that the inductors 20, 22 are independent of the sizes of the upper and lower housings 12, 16 and may consequently be used for any size of azimuth thruster. Figure 7 illustrates a schematic diagram of a further apparatus 102 for transferring electrical energy according to various examples. The apparatus 102 is similar to the apparatus 10, 101 and where the features are similar, the same reference numerals are used. The apparatus 102 includes a first inductor 20, first radio frequency circuitry 34, a controller 48, and a first electrical energy storage device 50 in a first member 12 of the apparatus 102 (such as the upper housing illustrated in Fig. 6). The apparatus 102 also includes a second inductor 22, second radio frequency circuitry 36, a sensor 38 and a second electrical energy storage device 52 in a second member 16 of the apparatus 102. The second member 16 of the apparatus 102 is rotatable relative to the first member 12 of the apparatus 102 as described in the preceding paragraphs.

The controller 48 may comprise any suitable circuitry to cause performance of the methods described herein. For example, the controller 48 may comprise at least one application specific integrated circuit (ASIC) and/or at least one field programmable gate array (FPGA) to perform the methods. By way of another example, the controller 48 may comprise at least one processor and at least one memory. The memory stores a computer program comprising computer readable instructions that, when read by the processor, cause performance of the methods described herein. The computer program may be software or firmware, or may be a combination of software and firmware.

The processor may be located on an azimuth thruster, or may be located remote from the azimuth thruster, or may be distributed between the azimuth thruster and a location remote from azimuth thruster. The processor could be part of another vessel wide processor (as software or hardware) and communicate using vessel wide communication methods (hard wired buses or wireless transmission). The processor may include at least one microprocessor and may comprise a single core processor, or may comprise multiple processor cores (such as a dual core processor or a quad core processor).

The memory may be located on an azimuth thruster, or may be located remote from the azimuth thruster, or may be distributed between the azimuth thruster and a location remote from the azimuth thruster. The memory may be any suitable non-transitory computer readable storage medium, data storage device or devices, and may comprise a hard disk and/or solid state memory (such as flash memory). The memory may be permanent non-removable memory, or may be removable memory (such as a universal serial bus (USB) flash drive).

The computer program may be stored on a non-transitory computer readable storage medium. The computer program may be transferred from the non-transitory computer readable storage medium to the memory. The non-transitory computer readable storage medium may be, for example, a USB flash drive, a compact disc (CD), a digital versatile disc (DVD) or a Blu-ray disc. In some examples, the computer program may be transferred to the memory via a wireless signal or via a wired signal.

The first electrical energy storage device 50 may include any suitable device or devices for storing electrical energy. For example, the first electrical energy storage device 50 may include at least one battery, and/or at least one supercapacitor. The first electrical energy storage device 50 is arranged to supply electrical energy to the first inductor 20.

The controller 48 may be arranged to control the first electrical energy storage device 50 to provide electrical energy to the first inductor 20 when the controller 48 determines that a predetermined criterion has been met. For example, the controller 48 may be arranged to determine whether an energy supply 54 (for example, from a vessel's electrical system) to the first inductor 20 has been reduced or removed. Where the controller 48 determines that the energy supply 54 has been reduced or removed, the controller 48 controls the first electrical energy storage device 50 to provide electrical energy to the first inductor 20.

The second electrical energy storage device 52 may include any suitable device or devices for storing electrical energy. For example, the second electrical energy storage device 52 may include at least one battery, and/or at least one supercapacitor.

In one example, the second electrical energy storage device 52 comprises at least one supercapacitor to receive electrical energy from the second inductor 22 at a first rate, and at least one battery that is arranged to receive electrical energy from the one or more supercapacitors at a second rate, less than the first rate. One advantage of this arrangement is that the one or more supercapacitors may enable a high charge rate and also function as a buffer for the one or more batteries to prevent them from being damaged by the high charge rate.

The second electrical energy storage device 52 is arranged to supply electrical energy to the second radio frequency communication circuitry 36. In some examples, electrical energy may additionally be supplied to the second radio frequency communication circuitry 36 directly from the second inductor 22.

It should be appreciated that where the second member 16 includes a plurality of inductors (such as illustrated in Fig. 4 for example), the plurality of inductors may be connected to the second electrical energy storage device 52 and to the second radio frequency communication circuitry 36 as illustrated in Fig. 7.

The controller 48 may be arranged to control the second member 16 to rotate to at least partially align the first part 30 and the second part 32 to enable the transfer of electrical energy between the first inductor 20 and the second inductor 22. For example, the controller 48 may be arranged to control an actuator (such as a motor) to rotate the second member 16 relative to the first member 12 to a predetermined position that at least partially aligns the first and second parts 30, 32. In some examples, the controller 48 may be configured to control the second member 16 to rotate to at least partially align the first part 30 and the second part 32 at a predetermined time of day (such as night time when the vessel is moored and not in use) and charge the second electrical energy storage device 52.

In operation of the apparatus 102, the magnetic fields around the transformer formed by the first and second inductors 20, 22 may attract magnetic particles from within oil filled compartments of the apparatus which may lead to a build-up of magnetic particles on the first and second inductors 20, 22. This may result in increased transformer performance of the first and second inductors 20, 22 (since the gap 28 is filled with ferrite metal particulates).

In some examples, the sensor 38 may include a device to sense the electrical output (such as power, voltage or current) from the second inductor 22 to determine whether the electrical output exceeds a threshold value (indicative of magnetic particles on the first and second inductors 20, 22) for a predetermined position of the second member 16, relative to the first member 12, and for a predetermined electrical input to the first inductor 20. Where the electrical output exceeds the threshold value, the sensor 38 may provide a signal to the second radio frequency communication circuitry 36 for transmission to the first radio frequency communication circuitry 34 and subsequent provision to a user to alert the user to the potential presence of the magnetic particles on the first and second inductors 20, 22 and in the oil of the apparatus 102.

Consequently, the apparatus 102 may advantageously enable the user to service the apparatus 102 to remove the magnetic particles and reduce the likelihood of failure of the apparatus 102. The presence of the magnetic particles may also indicate to the user that there is gear wear in the drive train.

In some examples, magnetic shielding may be provided around a portion of transformer formed by the first and second inductors 20, 22 to ensure that build-up of magnetic particles occurs where it may be detected, namely, the gap 28. The magnetic shielding may comprise two metal sheets separated by a low magnetic permeability material (such as epoxy). In some examples, magnetic shielding may be provided across all surfaces of the first and second inductors 20, 22 except for the portions of the first and second inductors 20, 22 that face the gap 28.

In some examples, the magnetic particles may be removed by the flow of oil when the oil pump is turned off. For example, magnetic particles may be removed when changing the oil, by turning off the transformer (and in doing so reducing the magnetic field holding the magnetic particles in place), and then turning on the oil system. This process advantageously cleans the transformer by removing the magnetic particles.

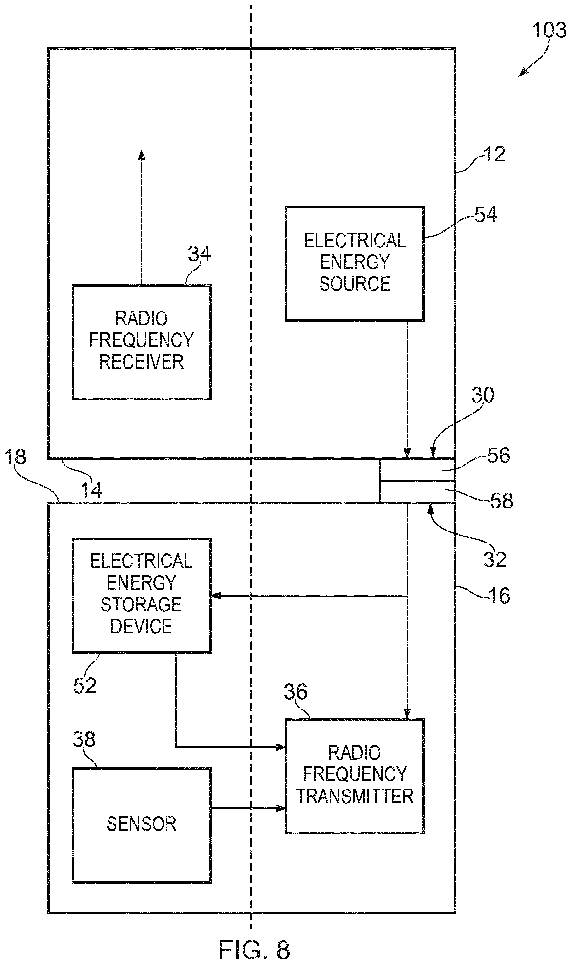

Figure 8 illustrates a schematic diagram of another apparatus 103 for transferring electrical energy. The apparatus 103 is similar to the apparatus 10, 101, 102 and where the features are similar, the same reference numerals are used. Consequently, the apparatus 103 includes a first member 12 having a first surface 14, a second member 16 having a second surface 18, first radio frequency circuitry 34, an electrical energy source 54, an electrical energy storage device 52, a sensor 38, and second radio frequency circuitry 36.

In some examples, the first member 12 is a stationary part of a vessel (in other words, the first member 12 may not be rotatable relative to the hull of the vessel), and the second member 12 is at least a part of an azimuth thruster which is rotatable relative to the first member 12. Additionally, the first radio frequency circuitry 34 comprises a radio frequency receiver positioned on the first member 12, and the second radio frequency circuitry 36 is a radio frequency transmitter positioned on the second member 16.

The apparatus 103 differs from the apparatus 10, 101, 102 in that the apparatus 103 includes a first electrical contact 56 (instead of the first inductor 20) positioned on a first part 30 of the first surface 14, and one or more second electrical contacts 58 (instead of the second inductor 22, or plurality of inductors) positioned on a second part 32 of the second surface 18. The first electrical contact 56 and the second electrical contact 58 are arranged to transfer electrical energy there between when the first part 56 and the second part 58 are aligned. For example, electrical energy may flow from the first electrical contact 56 to the second electrical contact 58 when the first and second electrical contacts 56, 58 make physical contact with one another (that is, when they abut one another).

In various examples, the first electrical contact 56 may comprise a conductive pad, a brush contact or a resilient contact (such as a spring loaded contact) for example. The second electrical contact 58 may comprise a brush contact, a resilient contact or a conductive pad, for example.

The first electrical contact 56 is connected to an electrical energy source 54 and supplies electrical energy to the second electrical contact 58 when the first and second parts 30, 32 are aligned. The electrical energy storage device 52 receives and stores the electrical energy from the second electrical contact 58. In some examples, the radio frequency transmitter 36 may receive electrical energy from the second electrical contact 58 directly.

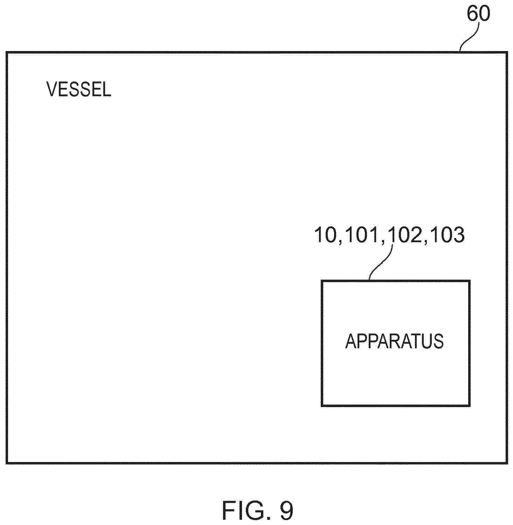

Fig. 9 illustrates a schematic diagram of a vessel 60 comprising an apparatus 10, 101, 102, 103 as described in the preceding paragraphs. The vessel 60 may be any mechanical system having a first member 12 and a second member 16 as described in the preceding paragraphs. For example, the vessel 60 may be a ship or a boat comprising an azimuth thruster.

It will be understood that the invention is not limited to the embodiments above-described and various modifications and improvements can be made without departing from the various concepts described herein. For example, the shape of the inductors could come in many forms. The example shown in figure 5 is two U shaped inductors. The core could be two L shapes for example (where their orientation allows for rotation), or two flat bars. The core may have any shape that allows the flux flow through one coil and then through the other. Part of the flux circuit could be completed by more air (i.e. longer air gaps), but in this case the power supplied to the first inductor may need to be larger for a given output power from the second inductor. In addition, the shape and size of the inductors may be different, to increase the chance of overlap. For example, the surface area of the opposing inductors faces (which transfer flux over the air gap), could be increased on one or both of the inductors.

Redundant coils may also be used. The coils could be electrically isolated but wrapped on top of each other, or additionally thermally isolated to prevent cascade failures from one to the other, by having them wrapped adjacent to each other with no overlap of the coils - with sufficient space between them to reduce heat transfer. Redundant cores could be used by having additional power transfer points.

Except where mutually exclusive, any of the features may be employed separately or in combination with any other features and the invention extends to and includes all combinations and sub-combinations of one or more features described.

## Claims

1. An azimuth thruster comprising apparatus (10, 101, 102, 103) for transferring electrical energy, comprising:
a stationary part (12) having a first surface (14) oriented perpendicular to a longitudinal axis (24) of the azimuth thruster and a perimeter extending around the first surface (14), the stationary part (12) being mountable to a vessel;
a rotatable part (16) having a second surface (18) oriented perpendicular to the longitudinal axis (24) and positioned adjacent the first surface (14) of the stationary part (12), and a perimeter extending around the second surface (18), the second surface (18) being arranged to rotate relative to the first surface (14), the first surface (14) and the second surface (18) facing each other and thereby defining a gap (28) there between;
wherein the apparatus (10, 101, 102, 103) for transferring electrical energy comprises:
a first inductor (20), positioned on a first part (30) of the first surface (14), to provide a magnetic field, the first part (30) extending along only a portion of the perimeter of the first surface (14);
a second inductor (22), positioned on a second part (32) of the second surface (18), the second part (32) extending along only a portion of the perimeter of the second surface (18), the second inductor (22) being arranged to generate an electrical current from the magnetic field when the first part (30) and the second part (32) are at least partially aligned, thereby forming a transformer transferring electrical energy across the gap (28).

2. An azimuth thruster as claimed in claim 1, wherein the apparatus further comprises a plurality of inductors (22₁, 22₂, 22₃, 22₄) positioned on separate parts (32₁, 32₂, 32₃, 32₄) of the perimeter of the first or second surface (14, 18).

3. An azimuth thruster as claimed in claim 2, wherein where the plurality of inductors (22₁, 22₂, 22₃, 22₄) are positioned on the separate parts (32₁, 32₂, 32₃, 32₄) of the perimeter of the second surface (18), at least one of the plurality of inductors (22₁, 22₂, 22₃, 22₄) positioned on the separate parts of the perimeter of the second surface is to generate an electrical current from the magnetic field generated by the first inductor (20) when the first part (30), and one of the separate parts (32₁, 32₂, 32₃, 32₄) of the second surface (18), are at least partially aligned.

4. An azimuth thruster as claimed in any of the preceding claims, wherein the apparatus further comprises an electrical energy storage device (52) to store electrical energy from the second inductor (22).

5. An azimuth thruster as claimed in any of the preceding claims, wherein the apparatus further comprises a further electrical energy storage device (50) to provide electrical energy to the first inductor (20).

6. An azimuth thruster as claimed in claim 5, wherein the apparatus further comprises a controller (48) to control the further electrical energy storage device (50) to provide electrical energy to the first inductor (20) when the controller (48) determines that a predetermined criterion has been met.

7. An azimuth thruster as claimed in claim 6, wherein the controller (48) is to determine whether an energy supply to the first inductor (20) has been reduced or removed, and to control the further electrical energy storage device (50) to provide electrical energy to the first inductor (20) when the controller (48) determines that the electrical energy supply has been reduced or removed.

8. An azimuth thruster as claimed in any of the preceding claims, wherein the apparatus further comprises radio frequency communication circuitry (36) coupled to the second inductor (22) to receive electrical energy from the second inductor (22).

9. An azimuth thruster as claimed in claim 8, wherein the apparatus further comprises a sensor (38) to sense an operating condition of at least a part of the apparatus, the radio frequency communication circuitry (36) being coupled to the sensor (38) and being configured to transmit a wireless signal for the sensed operating condition.

10. An azimuth thruster as claimed in any of the preceding claims, wherein the apparatus further comprises a controller (48) to control the rotatable member (16) to rotate to at least partially align the first part (30) and the second part (32).

11. An azimuth thruster as claimed in claim 10, wherein the controller (48) is configured to control the rotatable member (16) to rotate to at least partially align the first part (30) and the second part (32) at a predetermined time of day.

12. An azimuth thruster as claimed in any of the preceding claims, wherein the first inductor (20) comprises a first resonant transformer and the second inductor (22) comprises a second resonant transformer.

13. An azimuth thruster as claimed in any of the preceding claims, wherein the stationary part (12) is an upper housing of the azimuth thruster and the rotatable part (16) is a lower housing of the azimuth thruster.

14. A vessel (60) comprising an azimuth thruster as claimed in any of the preceding claims.

## Patentansprüche

1. Propellergondel, umfassend eine Vorrichtung (10, 101, 102, 103) zum Übertragen von elektrischer Energie, umfassend:
einen stationären Teil (12) mit einer ersten Fläche (14), die senkrecht zu einer Längsachse (24) der Propellergondel ausgerichtet ist, und einem Umfang, der um die erste Fläche (14) verläuft, wobei der stationäre Teil (12) an einem Schiff montiert werden kann;
einen drehbaren Teil (16) mit einer zweiten Fläche (18), die senkrecht zur Längsachse (24) ausgerichtet und angrenzend an die erste Fläche (14) des stationären Teils (12) positioniert ist, und einem Umfang, der um die zweite Fläche (18) verläuft, wobei die zweite Fläche (18) angeordnet ist, um sich relativ zur ersten Fläche (14) zu drehen, wobei die erste Fläche (14) und die zweite Fläche (18) zueinander gewandt sind und dadurch einen Spalt (28) dazwischen definieren;
wobei die Vorrichtung (10, 101, 102, 103) zum Übertragen von elektrischer Energie umfasst:
einen ersten Induktor (20), der auf einem ersten Teil (30) der ersten Fläche (14) positioniert ist, um ein Magnetfeld bereitzustellen, wobei der erste Teil (30) entlang nur eines Abschnitts des Umfangs der ersten Fläche (14) verläuft;
einen zweiten Induktor (22), der auf einem zweiten Teil (32) der zweiten Fläche (18) positioniert ist, wobei der zweite Teil (32) entlang nur eines Abschnitts des Umfangs der zweiten Fläche (18) verläuft, wobei der zweite Induktor (22) angeordnet ist, um einen elektrischen Strom aus dem Magnetfeld zu erzeugen, wenn der erste Teil (30) und der zweite Teil (32) mindestens teilweise ausgerichtet sind, wodurch sie einen Transformator bilden, der elektrische Energie über den Spalt (28) überträgt.

2. Propellergondel nach Anspruch 1, wobei die Vorrichtung ferner eine Vielzahl von Induktoren (22₁, 22₂, 22₃, 22₄) umfasst, die auf separaten Teilen (32₁, 32₂, 32₃, 32₄) des Umfangs der ersten oder zweiten Fläche (14, 18) positioniert sind.

3. Propellergondel nach Anspruch 2, wobei die Vielzahl von Induktoren (22₁, 22₂, 22₃, 22₄) auf den separaten Teilen (32₁, 32₂, 32₃, 32₄) des Umfangs der zweiten Fläche (18) positioniert sind, mindestens einer der Vielzahl von Induktoren (22₁, 22₂, 22₃, 22₄), die auf separaten Teilen des Umfangs der zweiten Fläche positioniert sind, zur Erzeugung eines elektrischen Stroms aus dem Magnetfeld, das durch den ersten Induktor (20) erzeugt wird, bestimmt ist, wenn der erste Teil (30) und einer der separaten Teile (32₁, 32₂, 32₃, 32₄) der zweiten Fläche (18) mindestens teilweise ausgerichtet sind.

4. Propellergondel nach einem der vorstehenden Ansprüche, wobei die Vorrichtung ferner eine elektrische Energiespeichervorrichtung (52) zum Speichern elektrischer Energie vom zweiten Induktor (22) umfasst.

5. Propellergondel nach einem der vorstehenden Ansprüche, wobei die Vorrichtung ferner eine weitere elektrische Energiespeichervorrichtung (50) zum Bereitstellen von elektrischer Energie zum ersten Induktor (20) umfasst.

6. Propellergondel nach Anspruch 5, wobei die Vorrichtung ferner eine Steuerung (48) umfasst, um die weitere elektrische Energiespeichervorrichtung (50) zu steuern, um elektrische Energie an den ersten Induktor (20) bereitzustellen, wenn die Steuerung (48) bestimmt, dass ein vorbestimmtes Kriterium eingehalten wurde.

7. Propellergondel nach Anspruch 6, wobei die Steuerung (48) vorgesehen ist, um zu bestimmen, ob eine Energiezufuhr zum ersten Induktor (20) reduziert oder entfernt wurde, und um die weitere elektrische Energiespeichervorrichtung (50) zu steuern, um dem ersten Induktor (20) elektrische Energie bereitzustellen, wenn die Steuerung (48) bestimmt, dass die elektrische Energiezufuhr reduziert oder entfernt wurde.

8. Propellergondel nach einem der vorstehenden Ansprüche, wobei die Vorrichtung ferner Funkfrequenzschaltkreise (36) umfasst, die an den zweiten Induktor (22) gekoppelt sind, um elektrische Energie vom zweiten Induktor (22) zu empfangen.

9. Propellergondel nach Anspruch 8, wobei die Vorrichtung ferner einen Sensor (38) zum Erfassen eines Betriebszustands mindestens eines Teils der Vorrichtung umfasst, wobei die Funkfrequenzkommunikationsschaltkreise (36) an den Sensor (38) gekoppelt und konfiguriert sind, um ein Funksignal für den erfassten Betriebszustand zu senden.

10. Propellergondel nach einem der vorstehenden Ansprüche, wobei die Vorrichtung ferner eine Steuerung (48) umfasst, um das drehbare Element (16) zu steuern, um sich so zu drehen, dass es den ersten Teil (30) und den zweiten Teil (32) mindestens teilweise ausrichtet.

11. Propellergondel nach Anspruch 10, wobei die Steuerung (48) konfiguriert ist, um das drehbare Element (16) zu steuern, um sich so zu drehen, dass es den ersten Teil (30) und den zweiten Teil (32) zu einer vorbestimmten Tageszeit mindestens teilweise ausrichtet.

12. Propellergondel nach einem der vorstehenden Ansprüche, wobei der erste Induktor (20) einen ersten resonanten Transformator umfasst und der zweite Induktor (22) einen zweiten resonanten Transformator umfasst.

13. Propellergondel nach einem der vorstehenden Ansprüche, wobei der stationäre Teil (12) ein oberes Gehäuse der Propellergondel und der drehbare Teil (16) ein unteres Gehäuse der Propellergondel ist.

14. Schiff (60), umfassend eine Propellergondel nach einem der vorstehenden Ansprüche.

## Revendications

1. Propulseur azimutal comprenant un appareil (10, 101, 102, 103) pour transférer l'énergie électrique, comprenant :
une partie fixe (12) ayant une première surface (14) orientée perpendiculairement à un axe longitudinal (24) du propulseur azimutal et un périmètre s'étendant autour de la première surface (14), la partie fixe (12) pouvant être montée sur un navire ;
une partie rotative (16) ayant une deuxième surface (18) orientée perpendiculairement à l'axe longitudinal (24) et positionnée de manière adjacente à la première surface (14) de la partie fixe (12), et un périmètre s'étendant autour de la deuxième surface (18), la deuxième surface (18) étant agencée pour tourner par rapport à la première surface (14), la première surface (14) et la deuxième surface (18) se faisant face et définissant ainsi un espace (28) entre elles ;
dans lequel l'appareil (10, 101, 102, 103) pour transférer l'énergie électrique comprend :
un premier inducteur (20), positionné sur une première partie (30) de la première surface (14), pour fournir un champ magnétique, la première partie (30) s'étendant seulement le long d'une partie du périmètre de la première surface (14) ;
un deuxième inducteur (22), positionné sur une deuxième partie (32) de la deuxième surface (18), la deuxième partie (32) s'étendant seulement le long d'une partie du périmètre de la deuxième surface (18), le deuxième inducteur (22) étant agencé pour générer un courant électrique à partir du champ magnétique lorsque la première partie (30) et la deuxième partie (32) sont au moins partiellement alignées, en formant ainsi un transformateur transférant l'énergie électrique à travers l'espace (28).

2. Propulseur azimutal selon la revendication 1, dans lequel l'appareil comprend en outre une pluralité d'inducteurs (22₁, 22₂, 22₃, 22₄) positionnés sur des parties séparées (32₁, 32₂, 32₃, 32₄) du périmètre de la première ou deuxième surface (14, 18).

3. Propulseur azimutal selon la revendication 2, dans lequel la pluralité d'inducteurs (22₁, 22₂, 22₃, 22₄) sont positionnés sur les parties séparées (32₁, 32₂, 32₃, 32₄) du périmètre de la deuxième surface (18), au moins l'un de la pluralité d'inducteurs (22₁, 22₂, 22₃, 22₄) positionnés sur les parties séparées du périmètre de la deuxième surface doit générer un courant électrique à partir du champ magnétique généré par le premier inducteur (20) lorsque la première partie (30), et l'une des parties séparées (32₁, 32₂, 32₃, 32₄) de la deuxième surface (18), sont au moins partiellement alignées.

4. Propulseur azimutal selon l'une quelconque des revendications précédentes, dans lequel l'appareil comprend en outre un dispositif de stockage de l'énergie électrique (52) pour stocker l'énergie électrique provenant du deuxième inducteur (22).

5. Propulseur azimutal selon l'une quelconque des revendications précédentes, dans lequel l'appareil comprend en outre un autre dispositif de stockage de l'énergie électrique (50) pour fournir l'énergie électrique au premier inducteur (20).

6. Propulseur azimutal selon la revendication 5, dans lequel l'appareil comprend en outre un module de commande (48) pour commander l'autre dispositif de stockage de l'énergie électrique (50) pour fournir l'énergie électrique au premier inducteur (20) lorsque le module de commande (48) détermine qu'un critère prédéterminé a été respecté.

7. Propulseur azimutal selon la revendication 6, dans lequel le module de commande (48) doit déterminer si une alimentation en énergie du premier inducteur (20) a été réduite ou supprimée, et commander l'autre dispositif de stockage de l'énergie électrique (50) pour fournir l'énergie électrique au premier inducteur (20) lorsque le module de commande (48) détermine que l'alimentation en énergie électrique a été réduite ou supprimée.

8. Propulseur azimutal selon l'une quelconque des revendications précédentes, dans lequel l'appareil comprend en outre des circuits de communication radiofréquence (36) couplés au deuxième inducteur (22) pour recevoir l'énergie électrique du deuxième inducteur (22).

9. Propulseur azimutal selon la revendication 8, dans lequel l'appareil comprend en outre un capteur (38) pour détecter une condition de fonctionnement d'au moins une partie de l'appareil, les circuits de communication radiofréquence (36) étant couplés au capteur (38) et étant configurés pour transmettre un signal sans fil pour la condition de fonctionnement détectée.

10. Propulseur azimutal selon l'une quelconque des revendications précédentes, dans lequel l'appareil comprend en outre un module de commande (48) pour commander l'élément rotatif (16) de manière à le faire tourner pour aligner au moins partiellement la première partie (30) et la deuxième partie (32).

11. Propulseur azimutal selon la revendication 10, dans lequel le module de commande (48) est configuré pour commander l'élément rotatif (16) de manière à le faire tourner pour aligner au moins partiellement la première partie (30) et la deuxième partie (32) à une heure prédéterminée de la journée.

12. Propulseur azimutal selon l'une quelconque des revendications précédentes, dans lequel le premier inducteur (20) comprend un premier transformateur résonnant et le deuxième inducteur (22) comprend un deuxième transformateur résonnant.

13. Propulseur azimutal selon l'une quelconque des revendications précédentes, dans lequel la partie fixe (12) est un logement supérieur du propulseur azimutal et la partie rotative (16) est un logement inférieur du propulseur azimutal.

14. Navire (60) comprenant un propulseur azimutal selon l'une quelconque des revendications précédentes.
